# EUROPEAN PATENT APPLICATION

(11) **EP 3 267 519 A1**
(43) Date of publication of application: **10.01.2018**
(21) Application number: 15884500.8
(22) Date of filing: 06.03.2015
(51) Int. Cl.: H01M 4/86, C08J 9/28, H01M 8/10

(54) **CONDUCTIVE AROMATIC POLYIMIDE POROUS FILM AND METHOD FOR PRODUCING SAME**

(71) Applicant: UBE INDUSTRIES, LTD., Ube-shi Yamaguchi 755-8633 (JP)
(72) Inventor: KAWAGISHI, Ken, Ichihara-shi Chiba 290-0045 (JP); TAKAHASHI, Junya, Ichihara-shi Chiba 290-0045 (JP); NAKAYAMA, Kimio, Ichihara-shi Chiba 290-0045 (JP); SHOJI, Tatsuya, Ichihara-shi Chiba 290-0045 (JP)
(74) Representative: Beckmann, Claus
(86) International application number: PCT/JP2015/056677
(87) International publication number: WO 2016/143002

(57) **Abstract**

An easily producible electroconductive aromatic polyimide porous film comprising an aromatic polyimide porous film and carbon nanotubes dispersed in the film has a resistance in the thickness direction of 100 mΩ·cm² or less and a Gurley air permeation resistance of 300 seconds/100 cc or less and exhibits especially high conductivity and high air permeability as a gas diffusion layer of a membrane-electrode assembly of a fuel cell.

## Description

### FIELD OF THE INVENTION

The present invention relates to a conductive aromatic polyimide porous film and a method for producing the porous film. In particular, the invention relates to a conductive aromatic polyimide porous film favorably employable as a gas diffusion layer which constitutes a fuel cell and a method for producing the porous film.

### BACKGROUND OF THE INVENTION

Fuel cells which generate electricity by burning a reducible gas such as hydrogen or methanol in an oxidizing gas such as oxygen present in air have been recently given much attention, because they do not emit an exhaust gas which causes environmental pollution. Among the fuel cells, a fuel cell employing polyelectrolyte has been particularly developed. The cell employing polyelectrolyte comprises a MEA (Membrane-Electrode-Assembly) and a pair of electroconductive separators arranged on respective sides of MEA.

The membrane-electrode-assembly comprises a polyelectrolyte membrane selectively transferring hydrogen ions and a pair of electrodes arranged on respective sides of the polyelectrolyte membrane. The electrode comprises a polyelectrolyte membrane and catalyst layers (which are made of carbon powder carrying platinum catalyst) and gas diffusion layers arranged on respective sides of the membrane. The gas diffusion layer is generally named GDL (Gas Diffusion Layer) and comprises a thin layer showing both of current collecting function and gas permeating function.

Since the gas diffusion layer necessarily has both of current collecting function and gas permeating function, it has been previously studied to use a carbon paper showing electro-conductivity and gas-permeability. The carbon paper is a sheet made by binding carbon fibers by a binder to produce a non-woven cloth and firing the produced non-woven cloth.

However, the carbon paper has such drawbacks that the production cost is high and its machining is not easy due to its poor flexibility. Therefore, porous polymer resin film containing electro-conductive particles have been studied for the use as alternative gas diffusion layers.

Japanese Patent Provisional Publication No. 2011-210737A (Patent Publication 1) describes an invention which is entitled "Gas Diffusion Layer for Fuel Cell and Its Preparing Method, Membrane-Electrode-Assembly, and Fuel Cell", and has a figure and a description of the aforementioned essential constitution of the fuel cell. Patent Publication 1 further has a detailed description for the fuel cell gas diffusion layer comprising a porous polymer resin film which contains conductive particles (i.e., electro-conductive powder) and furthermore describes certain examples of the conductive particles such as graphite, carbon black, an active carbon. Examples of the carbon black are acetylene black, furnace black, ketchen black, and vulcan black. Examples of the graphite are natural graphite and synthetic graphite.

Moreover, Patent Publication 1 describes a list of polymer resins for forming the porous polymer resin membrane. The list includes fluororesins such as PTFE (polytetrafluoroethylene), FEP (tetrafluoroethylene-hexa-fluoroethylene co-polymer), PVDF (polyvinylidene fluoride), ETFE (tetrafluoroethylene-ethylene copolymer), PCTFE (polychlorotrifluoroethylene) and PFA (tetrafluoroethylene-perfluoroalkyl ether). Particularly, PTFE is indicated preferable from the view-points of heat resistance, water repellency and chemical resistance.

Japanese Patent Provisional Publication No. 2014-22119A (Patent Publication 2) describes an invention entitled "Water Regulating Sheet, Gas Diffusion Sheet, Membrane-Electrode-Assembly, and Solid Polymer Type Fuel Cell". Patent Publication 2 also describes a list of polymer resins for forming the gas diffusion layer. The list comprises olefin resins such as polyethylene resin and polypropylene, and polyester resins such as polyethylene terephthalate and polyethylene naphthalate, in addition to the fluororesins described in Patent Publication 2. Nevertheless, Patent Publication 2 indicates that the fluororesin are preferred from the view-points of heat resistance, water repellency and chemical resistance.

Japanese Patent Provisional Publication No. 2014-132057 (Patent Publication 3) describes a polyimide porous film as a porous film having good heat resistance and good chemical resistance. However, there is no description concerning a conductive polyimide porous film.

### SUMMARY OF THE INVENTION

The fluororesin which is described in Patent Publications 1 and 2 as a representative membrane-forming material for the production of a gas diffusion membrane (or gas diffusion sheet) is certainly preferred from the view-points of heat resistance, water repellency and chemical resistance. However, the fluororesin has a certain drawback such as expensive. Moreover, it is not easy to produce a porous film having a controlled porous structure from fluororesin.

Patent Publication 2 discloses a fluororesin porous film membrane which is produced in the form of a non-woven cloth after subjecting fluororesin to electrospinning. This method, however, requires further increased production cost.

As for the polyolefin resins and polyester resins, they have such drawbacks such as poor heat resistance and poor chemical resistance.

The present inventors have made studies to develop the conductive polymer resin porous film, employing an aromatic polyimide resin (or aromatic polyimide) which is known to have such high heat resistance and chemical resistance as those of the fluororesin. The aromatic polyimide is also known to have high mechanical strength. The inventors' study has been started based on their assumption that the aromatic polyimide can be used to produce a conductive polymer resin porous film by incorporating carbon nanotubes into a polymer resin porous film, that thus produced conductive aromatic polyimide porous film shows high heat resistance and high chemical resistance, and further high gas permeability and good conductivity, and accordingly the conductive aromatic polyimide porous film is advantageously employable for form the aforementioned gas diffusion layer.

It has been known, however, that the aromatic polyimide resin is hardly soluble in ordinarily employed organic solvents and hardly fusible by heating.

In consideration of these drawbacks, Patent Publication 3 teaches that an aromatic polyimide porous film can be produced by the steps of preparing an aromatic polyimide precursor (i.e., polyamide acid or polyamic acid) by polycondensation of an aromatic tetracarboxylic acid component and an aromatic diamine component in a such organic amide solvent as N,N-dimethylacetamide; adding to thus prepared polyimide precursor solution a poor solvent having a relatively high boiling-point in which the polyimide precursor is hardly soluble; spreading thus obtained mixture on a temporary support; heating the spread mixture so as to evaporate the organic solvent as well as the poor solvent, forming an aromatic polyimide precursor porous film; and finally heating thus formed precursor porous film to a high temperature so that the desired aromatic polyimide porous film.

The above-described process for producing an aromatic polyimide porous film which comprises the steps of spreading an aromatic polyimide precursor solution containing a poor solvent and converting the spread solution into an aromatic polyimide porous film by heating was previously known.

Therefore, the inventors tried to produce an electroconductive aromatic polyimide porous film from an aromatic polyimide precursor solution containing carbon nanotubes dispersed therein by mixing with a poor solvent so as to give an aromatic polyimide precursor solution containing a poor solvent in addition to the dispersed carbon nanotubes. However, it was found that an aromatic polyimide precursor solution containing carbon nanotubes uniformly dispersed therein was hardly prepared. This is because an aromatic polyimide precursor solution should be prepared to have a high concentration for the purpose of producing a polyimide film, the aromatic polyimide precursor solution having a high concentration is inherently viscous, and the carbon nanotubes are highly aggregated in the viscous aromatic polyimide precursor solution.

As a result of further study, the inventors have succeeded in finding out a dispersant that is well soluble in the viscous aromatic polyimide precursor solution and able to uniformly disperse carbon nanotubes in the viscous aromatic polyimide precursor solution, and confirmed that an aromatic polyimide precursor solution in which carbon nanotubes are uniformly dispersed is obtained.

Subsequently, it has been confirmed that the aromatic polyimide precursor solution containing carbon nanotubes uniformly dispersed is employable as a spread layer-forming material for producing an aromatic polyimide porous film in which the carbon nanotubes are uniformly dispersed. Thus produced aromatic polyimide porous film shows high electro-conductivity as well as high porosity.

Accordingly, the present invention provides an electroconductive aromatic polyimide porous film comprising an aromatic polyimide porous film and carbon nanotubes dispersed in the film which has a resistance in the thickness direction of not higher than 100 mΩ·cm² and a Gurley air permeation resistance of not higher than 300 seconds/100 cc.

Preferred embodiments according to the electroconductive aromatic polyimide porous film of the invention are described below:
(1) The resistance in the thickness direction is not higher than 50 mΩ·cm².
(2) The Gurley air permeation resistance is not higher than 100 seconds/100 cc.
(3) The resistance in the thickness direction is not less than 0.01 mΩ·cm².
(4) The Gurley air permeation resistance is not less than 0.1 second/100 cc.
(5) The aromatic polyimide porous film is made of an aromatic polyimide obtained by polycondensation of an aromatic tetracarboxylic acid compound and an aromatic amine compound and imidization (i.e., imide-forming reaction) of the polycondensated product.
(6) The carbon nanotubes are multilayer carbon nanotubes.
(7) The carbon nanotubes is contained in an amount of 10 to 50 wt.%.

The electroconductive aromatic polyimide porous film of the invention can be easily produced, for example, by either of the below-described two processes.

### <Production Process 1>

A process comprising the steps of:
preparing an aromatic polyimide precursor by polycondensation of an aromatic tetracarboxylic acid compound and an aromatic diamine compound in an organic solvent;
adding to thus prepared polyimide precursor solution a poor solvent having a boiling-point higher than that of the organic solvent, carbon nanotubes, and a dispersant for the carbon nanotubes, whereby preparing a carbon nanotube-containing aromatic polyimide precursor solution;
spreading the carbon nanotube-containing aromatic polyimide precursor solution on a support, whereby preparing a spread film;
heating the spread film to evaporate the organic solvent and poor solvent, whereby converting the spread film into a phase separation film; and
heating the phase separation film to an increased temperature, whereby converting the phase separation film into the aromatic polyimide porous film.

### <Production Process 2>

A process comprising the steps of:
preparing an aromatic polyimide precursor by polycondensation of an aromatic tetracarboxylic acid compound and an aromatic diamine compound in an organic solvent;
adding to thus prepared polyimide precursor solution carbon nanotubes and a dispersant for the carbon nanotubes, whereby preparing a carbon nanotube-containing aromatic polyimide precursor solution;
spreading the carbon nanotube-containing aromatic polyimide precursor solution on a support, whereby preparing a spread film;
bringing the spread film into contact with a poor solvent, whereby converting the spread film into a phase separation film;
heating the phase separation film to a high temperature, whereby converting the phase separation film into the aromatic polyimide porous film.

Preferred embodiments of the above-mentioned production processes 1 and 2 are described below.
(1) The dispersant for carbon nanotubes is a polymer dispersant selected from the group consisting of methyl cellulose, ethyl cellulose, propoxymethyl cellulose, polyvinyl pyrrolidone, polyvinyl alcohol, polyvinyl butyral, and polyvinyl formal.
(2) The carbon nanotubes in the carbon nanotube-containing aromatic polyimide precursor solution are dispersed in the precursor solution in the form of aggregated particles having a median diameter of not larger than 5 µm, the median diameter being determined by means of laser spectroscopy.

The electroconductive aromatic polyimide porous film of the invention is favorably employable as a gas diffusion layer constituting a membrane-electrode-assembly comprising a polyelectrolyte membrane, a catalyst layer and a gas diffusion layer both arranged on respective sides of the polyelectrolyte membrane.

### EFFECTS OF THE INVENTION

The electroconductive aromatic polyimide porous film of the invention has high electro-conductivity specifically in its thickness direction and shows high gas permeability and can be produced with no difficulty, and is hence particularly useful for producing a gas diffusion layer of a membrane-electrode-assembly for a fuel cell. Therefore, the electroconductive aromatic polyimide porous film of the invention can be favorably employed for producing a gas diffusion layer of a membrane-electrode-assembly for a fuel cell which comprises a polyelectrolyte membrane, a catalyst layer and a gas diffusion layer both arranged on respective sides of the polyelectrolyte membrane, in which the gas diffusion layer.

Moreover, the electroconductive aromatic polyimide porous film of the invention can be especially favorably employed for producing a variety of films which are required to have high electro-conductivity and high gas permeability.

### EMBODIMENTS OF THE INVENTION

The electroconductive aromatic polyimide porous film of the invention can be easily produced by either of the aforementioned production processes 1 and 2.

In the first place, the production process 1 is described hereinafter in detail.

The production process 1 comprises the following steps:
(1) a step of preparing an aromatic polyimide precursor (hereinafter, may be referred to simply as "polyimide precursor") by polycondensation of an aromatic tetracarboxylic acid compound and an aromatic diamine compound in an organic solvent (hereinafter, may be referred to as "good solvent" for clearly differentiating from the poor solvent mentioned below) and adding to thus prepared polyimide precursor solution a poor solvent having a boiling-point higher than that of the good solvent, carbon nanotubes, and a dispersant for the carbon nanotubes, whereby preparing a carbon nanotube-containing aromatic polyimide precursor solution;
(2) a step of spreading the carbon nanotube-containing aromatic polyimide precursor solution on a support, whereby preparing a spread film;
(3) a step of heating the spread film to evaporate the good solvent and poor solvent, whereby converting the spread film into a phase separation film;
   and
(4) a step of heating the phase separation film to an increased temperature, whereby converting the phase separation film into the aromatic polyimide porous film.

In the production process 1, the step for preparing a carbon nanotube-containing aromatic polyimide precursor solution can be favorably performed by either of the below-described processes.
a) A process comprising the steps of preparing a dispersion that comprises carbon nanotubes and a dispersant for the carbon nanotubes dissolved or dispersed in a good solvent (in which a polyimide precursor is soluble), adding to the dispersion an aromatic tetracarboxylic acid compound (hereinafter, may be referred simply to as "tetracarboxylic acid compound") and an aromatic diamine compound (hereinafter, may be referred simply to as "diamine compound"), and subsequently stirring thus prepared dispersion, whereby preparing the polyimide precursor *in situ* in the dispersion. The poor solvent can be placed in any steps.
b) A process comprising the steps of causing a reaction of a tetracarboxylic acid compound with a diamine compound to obtain a polyimide precursor, whereby preparing a polyimide precursor solution; independently, dissolving or dispersing carbon nanotubes and a dispersant for the carbon nanotubes in a good solvent, whereby preparing a carbon nanotube-containing dispersion; and mixing the polyimide precursor solution and carbon nanotube-containing dispersion. The poor solvent can be placed in any steps.

The polyamide precursor may be named a polyamic acid or a polyamide acid, and its preparation method is already known. In the known preparation method, a tetracarboxylic acid compound and a diamine compound are caused to reaction in a high polar solvent (good solvent) under heating, so as to perform polycondensation, whereby preparing the polyimide precursor.

Examples of the tetracarboxylic acid compounds for the use in the preparation of the polyimide precursor include the following compounds:
3,3',4,4'-biphenyltetracarboxylic dianhydride (s-BPDA), 2,3,3',4'-biphenyltetracarboxylic dianhydride (a-PDA), 2,2',3,3'-biphenyltetracarboxylic dianhydride (i-BPDA), pyromellitic dianhydride (PMDA), 3,3',4,4'-benzophenonetetracarboxylic dianhydride (BTDA), 2,2',3,3'-benzophenonetetracarboxylic dianhydride, 2,2-bis(3,4-dicarboxylphenyl)propane dianhydride, 2,2-bis(2,3-dicarboxyphenyl)propane dianhydride, bis(3,4-dicarboxyphenyl) ether dianhydride, bis(2,3-dicarboxyphenyl) ether dianhydride, 2,3,6,7-naphthalenetetracarboxyic dianhydride, 1,4,5,8-naphthalenetetracarb-oxyic dianhydride (NTDA), 1,2,5,6-naphthalenetetracarb-oxyic dianhydride, 2,2-bis(3,4-dicarboxyphenyl)-1,1,1,3,3,3-hexafluoropropane dianhydride (6FDA), and 2,2-bis(2,3-dicarboxyphenyl)-1,1,1,3,3,3-hexafluoro-propane dianhydride. These compounds can be used alone or in combination.

Among the above-mentioned compounds, it is preferred to use s-BPDA and/or a-BPDA for the reason that a finally produced aromatic polyimide porous film shows high heat resistance, high chemical resistance and high mechanical strength.

Examples of the diamine compounds for the use in the preparation of the polyimide precursor include the following compounds:
phenylenediamines such as p-phenylenediamine (PPD) and m-phenylenediamine (MPD), diaminobenzoic acids such as 3,5-diaminobenzoic acid, diaminodiphenyl ethers such as 4,4'-diaminodiphenyl ether (ODA), 3,4'-diaminodiphenylether, 3,3'-diaminodiphenyl ether, 3,3'-dimethyl-4,4'-diaminodiphenyl ether and 3,3'-dimethoxydiamino-diphenyl ether, diaminodiphenylmethanes such as 4,4'-diaminodiphenylmethane, 3,3'-diaminodiphenylmethane,3,3'-dichloro-4,4'-diaminodiphenylmethane, 2,2'-difluoro-4,4'-diaminodiphenylmethane, 3,3'-dimethyl-4,4'-diaminophenyl-methane and 3,3'-dimethoxy-4,4'diaminodiphenylmethane, diaminodiphenylpropanes such as 2,2-bis(4-aminophenyl)-propane, 2,2-bis(3-aminophenyl)propane and 2,2-(3,4'-diaminodiphenyl)propane, bis(aminophenyl)hexafluoropropanes such as 2,2-bis(4-aminophenyl)hexafluoro-propane and 2,2-bis(3-aminophenyl)hexafluoropropane, diaminodiphenylsulfone such as 4,4'-diaminodiphenylsulfone and 3,3-diaminodiphenylsulfone, diaminodibenzothiophenes such as 3,7-diamino-2,8-dimethyl-dibenzothiophene, 2,8-diamino-3,7-dimethyl-dibenzothiophene and 3,7-diamino-2,6-dimethyl-dibenzothiophene, diaminodiphenylenesulfone (= diaminodibenzothiophene-5,5-dioxide) such as 3,7-diamino-2,8-dimethyl-diphenylenesulfone, 3,7-diamino-2,8-diethyl-diphenylenesulfone, 3,7-diamino-2,8-dimethoxy-diphenylenesulfone and 2,8-diamino-3,7-dimethyl-diphenylenesulfone, diaminobibenzyls such as 4,4'-diaminobibenzyl, 4,4'-diamino-2,2'-dimethylbibenzyl, diaminobiphenyls such as o-dianisidine, o-triadine and m-tolidine, diaminobenzophenones such as 4,4'-diaminobenzophenone and 3,3'-diaminobenzophenone, diaminobenzidines such as 2,2',5,5'-tetrachlorobenzidine, 3,3',5,5'-tetrachlorobenzidine, 3,3'-dichlorobenzidine, 2,2'-dichlorobenzidine, 2,2',3,3',5,5'-hexachlorobenzidine, 2,2',5,5'-tetrabromobenzidine, 3,3',5,5'-tetrabromobenzidine, 3,3'-dibromobenzidine, 2,2'-dibromobenzidine and 2,2',3,3',5,5'-hexachloro-benzidine, bis(aminophenoxy)benzenes such as 1,4-bis(4-aminophenoxy)benzene (TPE-Q) and 1,3-bis(4-aminophenoxy)benzene (TPE-R), di(amino-phenyl)benzenes such as 1,4-bis(4-aminophenyl)benzene and 1,4-bis(3-aminophenyl)benzene, bis[(aminophenoxy)phenyl]propanes such as 2,2-bis[4-(4-aminophenoxy)phenyl]propane and 2,2-bis[3-(3-aminophenoxy)phenyl]propane, bis[(3-aminophenoxy)phenyl]hexafluoropropanes such as 2,2-bis[4-(4-aminophenoxy)phenyl]hexafluoropropane and 2,2-bis[3-(3-aminophenoxy)phenyl]hexafluoropropane, di[(aminophenoxy)phenyl]sulfones such as bis[4-(4-aminophenoxy)phenyl]sulfone and bis[4-(3-aminophenoxy)phenyl]sulfone, di(aminophenyl)biphenyls such as 4,4'-bis(4-aminophenyl)-biphenyl, and diaminobenzoazols such as 5(6)-amino-2-(4-aminophenyl)benzoimidazole (DAPBI). These compounds can be used alone or in combination. Other alicyclic compound such as isophoronediamine and cyclohexanediamine can be used in combination, unless the use of the alicyclic compound does not disturb the polymerization.

Among the above-mentioned compounds, the use of ODA is preferred, in consideration of mechanical strength shown by the finally produced aromatic polyimide porous film.

The organic solvent for the use in the preparation of the polyimide precursor, that is, a good solvent, namely, an organic solvent in which the polyimide precursor is soluble can be an amide solvent. Examples of the amide solvents include N-methyl-2-pyrrolidone (NMP), N-ethyl-2-pyrrolidone (NEP), N,N-dimethylacetamide (DMAc), N,N-diethylacetamide, N,N-dimethylformamide (DMF) and 1,3-dimethyl-2-imidazoline (DMI). In order to produce an aromatic polyimide porous film from the polyimide precursor, the good solvent should have a boiling point lower than that of the after-mentioned poor solvent. Accordingly, it is preferred that the good solvent has a low boiling point. Particularly preferred are N,N-dimethylacetamide (b.p. 165°C), N,N-diethyacetamide (b.p. 182-186°C), and N,N-dimethylformamide (b.p. 153°C).

These good solvents can be used alone or in combination.

It is preferred that the poor solvent hardly dissolve the polyimide precursor and has a boiling point higher than that of the good solvent by at least 20°C. Examples of the poor solvents include glycol ether solvents, carboxylic diester solvents and glycol monoether acetate solvents.

Examples of the glycol ether solvents include diethyleneglycol ethyl methyl ether (EDM: b.p. 176°C), diethylene glycol isopropyl methyl ether (IPDM: b.p. 179°C), dipropylene glycol monomethyl ether (DPM: b.p. 188°C), diethylene glycol diethyl ether (EDE: b.p. 189°C), diethylene glycol monomethyl ether (DM: b.p. 194°C), diethylene glycol butyl methyl ether (BDM: b.p. 212°C), tripropylene glycol dimethyl ether (MTPOM: b.p. 215°C), triethylene glycol dimethyl ether (MTM: b.p. 216°C), diethylene glycol monobutyl ether (DB: b.p. 230°C), diethylene glycol (b.p. 244°C), ethylene glycol monophenyl ether (b.p. 245°C), triethylene glycol mono-methyl ether (b.p. 249°C), diethylene glycol dibutyl ether (b.p. 256°C), triethylene glycol butyl methyl ether (b.p. 261°C), and triethylene glycol (b.p. 285°C). The poor solvent can be selected in consideration of difference of the boiling point from that of the good solvent and of ability to coagulate the polyimide precursor in the solvent mixture.

Preferred examples of the carboxylic diester solvents include dimethyl succinate (b.p. 200°C), diethyl succinate (b.p. 218°C), dimethyl glutarate (b.p. 210-215°C), diethyl glutarate (b.p. 237°C), dimethyl adipate (b.p. 215-225°C) and diethyl adipate (b.p. 245°C). Also preferred is dibasic acid ester (DBE), namely, a mixture of dimethyl succinate, dimethyl glutarate and dimethyl adipate.

Examples of the glycol monoether acetates include ethyl carbinate acetate (ECA: b.p. 218°C) and butyl carbonate acetate (BCA: b.p. 247°C). The poor solvent should be removed in the step of heating to dryness and the step for the formation of imide structure, it is not preferred that the poor solvent has a very high boiling point. Thus, the poor solvent is preferred to have a boiling point of 250°C or lower.

These poor solvents can be used alone or in combination.

Examples of other employable poor solvents include 1-octanol (b.p. 195°C), terpineol (b.p. 219°C), 1,5-pentane diol (b.p. 242°C) and isophrone (b.p. 215°C).

The poor solvent can be added in an appropriate amount in consideration of the nature of the poor solvent. In consideration of the ability for coagulating the polyimide precursor, the amount ordinarily is in the range of 10 to 70 wt.%, per the total amount of the good and poor solvents.

The carbon nanotubes are known as powdery ultra-fine carbon fibers such as carbon fibers formed by the gas phase growing process, monolayer carbon nanotubes, and multilayer carbon nanotubes. The use of multilayer carbon nanotubes is particularly preferred.

The carbon nanotubes can be used in combination with other electroconductive powders such as fine carbonaceous powders including carbon blacks, specifically acetylene black and ketchen black. If the carbon nanotubes are used in combination with other electroconductive fine powders, the carbon nanotubes are preferred to occupy at least 20 wt.%, preferably at least 50 wt.%, more preferably at least 70 wt.%, of the amount of the total electro-conductive powders.

Examples of the dispersant to be placed in a carbon nanotube-containing dispersion include polymer dispersants such as cellulose derivatives (e.g., methyl cellulose, ethyl cellulose, and propoxymethyl cellulose), poly -(vinyl acetal) (e.g., poly(vinyl butyral) and poly(vinyl formal), polyvinyl pyrrolidone, polyvinyl alcohol, and polyamic acid salt. The polymer dispersants preferably has a weight-average molecular weight in the range of 5,000 to 100,000. More preferred range of a weight-average molecular weight is 8,000 to 50,000.

The dispersant is preferably used in an amount of 10 to 100 weight parts, per 100 weight parts of the content of the carbon nanotubes.

The polymer dispersant is understood to be adsorbed by the carbon nanotubes in the carbon nanotube-containing dispersant, resulting in covering the carbon nanotubes, so that the respective carbon nanotubes covered by the polymer dispersant repel each other due to steric hindrance of their polymeric molecular chains and hence the carbon nanotubes are stably dispersed in the dispersion.

Among these polymer dispersants, the multilayer carbon nanotubes are specifically preferred.

The carbon nanotubes can be dispersed in a solvent or a dispersion by means of various dispersing means. Examples of the dispersing means include a stirring means such as a beads mill and a jet mill, and a ultrasonic dispersing means.

The solvent or solution in which carbon nanotubes are placed is subjected to the dispersing procedure, preferably so that the carbon nanotubes can be present in the dispersion in form of aggregated particles having a median diameter of not larger than 5 µm, the median diameter being determined by means of laser spectroscopy.

The carbon nanotube-containing aromatic polyimide precursor solution to be used for the preparation of the electroconductive aromatic polyimide porous film of the invention preferably contains a basic compound for forming a salt with the carboxyl group of the polyimide precursor. The basic compound is effective to increase the dispersing stability of the carbon nanotubes in the polyimide precursor solution and hence is effective to produce an aromatic polyimide porous film having a good porous structure.

The above-mentioned basic compound forms a salt with the carboxyl part of the polyimide precursor in the polyimide precursor solution. The formation of the salt with the polyimide precursor is effective to produce a porous film having openings on both sides and showing high porosity and high gas permeability.

There are no specific limitations with respect to the basic compounds. However, the basic compound has a pKa 7.5 or higher. Examples of the basic compounds include monocations such as imidazoles, alkylamines, piperazines, guanidines, guanidine salts, carboxyl substituted-alkylamines, piperidines and pyrrolidines.

These basic compounds can be used alone or in combination.

Among the above-mentioned basic compounds, imidazoles are most preferred. The use of imidazoles is effective to accelerate the formation of imide bonding in the heating-drying step, and hence to increase the strength of the resulting aromatic polyimide porous film. Examples of the imidazoles include 1,2-dimethyl-imidazol, N-methylimidazole, N-benzyl-2-methylimidazole, 2-methylimidazole, 2-ethyl-4-methylimidazole, 4-ethyl-2-methylimidazole, 1-methyl-4-ethylimidazole, and 5-methylbenzimidazole. Most preferred is 1,2-dimethyl-imidazole.

The basic compound can be placed in the polyimide precursor solution in such an amount as not disturbing its dissolution, and ordinarily is in an amount of 0.01 to 1 mole equivalent, preferably 0.02 to 0.8 mole equivalent per the amount of the carboxylic group of the polyimide precursor. Most preferred amount for obtaining a porous film having increased openings on both sides of the film and high gas permeability is in the range of 0.06 to 0.4 mole equivalent.

### <Preparation of Polyimide Precursor Solution in Production Process 1>

The polyimide precursor solution to be used for the production of the electroconductive aromatic polyimide porous film according to the invention can be obtained by causing polycondensation of an aromatic tetracarboxylic dianhydride and an aromatic diamine, optionally in the presence of the basic compound, in a mixture of a good solvent and a poor solvent, by the known method.

For instance, the polyimide precursor solution can be produced by the steps of preparing a mixture solution of a good solvent, a poor solvent and a basic compound, adding approximately equivalent amounts of a tetracarboxylic dianhydride and a diamine, and processing the resulting mixture to give a homogeneous mixture. The polyimide precursor solution also can be produced by the steps of mixing approximately equivalent amounts of a tetracarboxylic dianhydride and a diamine in a good solvent, to give a polyimide precursor, and adding to the resulting the polyimide precursor solution small amounts of a poor solvent and the basic compound by portions under stirring, whereby preparing a homogeneous mixture.

The reaction for giving the polyimide precursor from a tetracarboxylic dianhydride and a diamine can be performed preferably at a temperature in the range of -30 to 120°C, more preferably -20 to 80°C, and preferably for a period in the range of 0.5 to 100 hours, more preferably 2 to 48 hours. It is preferred that the ratio of the tetracarboxylic dianhydride and diamine is adjusted to be equivalent mole. However, the ratio can be slightly varied for controlling the degree of polycondensation.

Optionally, the polyimide precursor solution can contain an organic phosphorus-containing compound such as phosphoric esters, for example, monocaproyl phosphate, monooctyl phosphate, monolauryl phosphate, monomyristyl phosphate, monocetyl phosphate, monostearyl phosphate, monophosphate of triethylene glycol monotridecyl ether, monophosphate of tetraethylene glycol monolauryl ether, monophosphate of diethylene glycol monostearyl ether, dicaproyl phaphate, dioctyl phosphate, dicapryl phosphate, dilauryl phosphate, dimyristyl phosphate, dicetyl phosphate, distearyl phosphate, diphosphate of tetraethylene glycol mononeopentyl ether, diphosphate of triethylene glycol monotridecyl ether, diphosphate of tetraethylene glycol monolauryl ether and diphosphate of diethylene glycol monostearyl ether, and amine salts of these phosphates.

The use of the organic phosphorus-containing compound is effective to increase the strength of the resulting porous film and to easily take the resulting porous film off the support.

The polyimide precursor solution of the invention may contain one or more known additives such as surface active agents, organic silanes, pigments, fillers such as fine metallic particles, anti-wear agents, dielectric materials and lubricants, unless the incorporation of the additives disturbs the characteristics expected in the invention.

Further, other polymers can be incorporated into the polyimide precursor solution, unless their incorporation disturbs the characteristics expected in the invention.

Furthermore, a thermally decomposable polymer can be incorporated into the polyimide precursor solution, so as to increase the gas permeability of the finally produced electroconductive aromatic polyimide porous film. An examples of the thermally decomposable polymer is a polyester. Most preferred is methyl polymethacrylate (PMMA).

The polyimide precursor is ordinarily contained in the polyimide precursor solution in concentration from 1 to 50 wt.%, preferably 5 to 30 wt.%. The viscosity of the polyimide precursor solution is ordinarily in the range of 0.1 Pa·s to 3,000 Pa·s, preferably in the range of 0.5 Pa·s to 1,000 Pa·s, more preferably in the range of 1 Pa·s to 500 Pa·s.

### <Production of Aromatic Polyimide Porous Film in Production Process 1>

The aromatic polyimide porous film of the invention can be a self-supporting polyimide porous film and a coating polyimide porous film formed on a support by a coating procedure.

The aromatic polyimide porous film can be obtained from the polyimide precursor solution by known procedures. The details of the procedures for performing the production process 1 are described below.

Initially, the polyimide precursor solution is spread on a support to give a coating layer. There are no specific limitations for the spreading procedure. For examples, there can be mentioned a procedure of spreading on a glass plate or a stainless plate by extruding from a blade or a T-die; and spreading continuously on a continuously rotating drum or belt to form a continuous spread layer. The support can be a metal film, a metal wire, an inorganic material plate, or a plastic film.

The spread layer is subsequently heated to remove the good solvent and the poor solvent successively by evaporation so as to cause phase separation in the spread layer, whereby producing a porous film of the polyimide precursor. The spread layer can be ordinarily heated to 50°C to 200°C, for 3 min. to 120 min.

The procedure of heating a polyimide precursor solution containing a mixture of a good solvent and a poor solvent to form a porous film of the polyimide precursor is already known as a heat-inducing phase separation procedure (or dry cast method).

The polyimide precursor porous film formed on the support can be optionally separated from the support and subjected to additional heat treatment to remove the basic compound from the carbonyl group and obtain a polyimide porous film by way of imide linkage formation. The thermal procedure for the formation of imide linkage can be performed, for instance, by fixing the polyimide precursor porous film onto a support by means of fixing aids such as pins, chucks or pinch rolls for not disturbing the evenness of the film by way of heat shrinkage, and heating thus fixed film in atmospheric or inert conditions. The heating procedure can be performed by heating initially at a relatively low temperature such as a temperature in the range of approximately 100°C to 200°C, and finally at a temperature in the range of 280°C to 600°C, preferably 300°C to 550°C, for 2 to 120 min., preferably 3 to 90 min., more preferably 5 to 60 min.

In the second place, the production process 2 is described hereinafter.

The production process 2 comprises the following steps:
(1) a step of preparing an aromatic polyimide precursor by polycondensation of an aromatic tetracarboxylic acid compound and an aromatic diamine compound in an organic solvent and adding to thus prepared polyimide precursor solution carbon nanotubes and a dispersant for the carbon nanotubes, whereby preparing a carbon nanotube-containing aromatic polyimide precursor solution;
(2) a step of spreading the carbon nanotube-containing aromatic polyimide precursor solution on a support, whereby preparing a spread film;
(3) a step of bringing the spread film into contact with a poor solvent, whereby converting the spread film into a phase separation film;
   and
(4) a step of heating the phase separation film to a high temperature, whereby converting the phase separation film into the aromatic polyimide porous film.

The production process 2 differs from the production process 1 in that the step (1) of the production process 2 does not comprise incorporation of a poor solvent into the carbon nanotube-containing aromatic polyimide precursor solution and that the step (3) of the production process 2 comprises the procedure of bringing the spread layer into contact with a poor solvent.

The procedure of bringing the spread layer into contact with a poor solvent can be performed, for instance, by placing the spreading layer of the polyimide precursor solution in a poor solvent (coagulating solvent) or bringing the spread layer into contact with the poor solvent (non-solvent inducing procedure), or bringing the spread layer into contact with a vapor or mist of the poor solvent. These procedures *per se* are already known. The poor solvent or non-solvent ordinarily is a solvent of a low boiling point such as water, a lower alcohol or acetone, a mixture of such solvent of a low boiling point and a good solvent for the polyimide precursor.

Thus, the production procedure 2 can be performed in the same manner except for the above-mentioned differing steps. Therefore, no more details on the production procedure 2 are described.

### EXAMPLES

The present invention is described in more detail by the following Examples and Comparison Example.

### [Preparation of Carbon Nanotube-containing Dispersion]

### [Determination of Median Diameter of Carbon Nanotubes in Dispersion]

Median diameter (D₅₀)-50% volume-base diameter was measured by means of Laser-induced Scattering Particle Size Distribution Measuring Apparatus LA-950V2 (available Horiba Seisakusho).

### [Dispersion 1]

15 g of a multi-layer carbon nanotube (CNT, product name: AMC available from Ube Industries, Ltd.) was mixed with 285 g of 1-methyl-2-pyrrolidone (NMP) containing 1.25 wt.% of methyl cellulose (dispersant) and 0.125 wt.% of trimethylamine (TEA). The resulting mixture was subjected to the dispersing procedure using a beads mill for approximately 2 hours, to give the dispersion 1 containing 5 wt.% of multi-layer carbon nanotubes.

The median diameter of the multi-layer carbon nanotubes in the dispersion was 1.1 µm.

### [Dispersion 2]

The procedures described for the preparation of dispersion 1 were repeated except that polyvinyl alcohol (1 wt.%) was employed as the dispersant and TEA was not employed, to give the dispersion 2 containing 5 wt.% of multi-layer carbon nanotubes.

The median diameter of the multi-layer carbon nanotubes in the dispersion was 1.3 µm.

### [Dispersion 3]

The procedures described for the preparation of dispersion 1 were repeated except that polyvinyl pyrrolidone (1.25 wt.%) was employed as the dispersant and TEA was not employed, to give the dispersion 3 containing 5 wt.% of multi-layer carbon nanotubes.

The median diameter of the multi-layer carbon nanotubes in the dispersion was 1.5 µm.

### [Dispersion 4]

The procedures described for the preparation of dispersion 1 were repeated except that polyvinyl alcohol (1 wt.%) was employed as the dispersant and NMP was replaced with N,N-dimethylacetamide (DMAc, 285 g), to give the dispersion 4 containing 5 wt.% of multi-layer carbon nanotubes.

The median diameter of the multi-layer carbon nanotubes in the dispersion was 1.3 µm.

### [Dispersion 5]

20 g of a multi-layer carbon nanotube (CNT, product name: AMC available from Ube Industries, Ltd.) was mixed with 368 g of N,N-dimethylacetamide (DMAc) containing 12 wt.% of polyvinyl alcohol (dispersant). The resulting mixture was subjected to the dispersing procedure comprising 5 pass processing by means of Nanoveiter (cross nozzle type) at 150 MPa, to give the dispersion 5 containing 5 wt.% of multi-layer carbon nanotubes.

The median diameter of the multi-layer carbon nanotubes in the dispersion was 1.2 µm.

### [Dispersion 6]

The procedures described for the preparation of dispersion 5 were repeated except for replacing DMAc with dimethylformamide (DMF), to give the dispersion 6 containing 5 wt.% of multi-layer carbon nanotubes.

The median diameter of the multi-layer carbon nanotubes in the dispersion was 1.2 µm.

### [Dispersion 7]

The procedures described for the preparation of dispersion 2 were repeated except for replacing the carbon nanotubes with acetylene black (15 g), to give the dispersion 7 containing 5 wt.% of acetylene black.

### [Production of Electroconductive Aromatic Polyimide Porous film - 1]

### [Example 1]

In a separable flask (volume: 500 mL) were placed the dispersion 1 (100 g) and NMP (135 g), and the resulting mixture was stirred using a stirring paddle to give a uniform mixture. To the uniform mixture were subsequently added 3,3',4,4'-biphenyltetracarboxylic dianhydride (s-BPDA, 11.88 g) and 4,4'-diaminodiphenyl ether (ODA, 8.12 g), and the resulting mixture was stirred for 24 hours at room temperature. To thus obtained mixture was then added 3,3',4,4'-biphenyltetracarboxylic dianhydride (s-BPTA, 0.443 g), and the mixture was stirred for 24 hours, to prepare a polyimide precursor solution containing carbon nanotubes (carbon nanotube content: 20 wt.%).

The polyimide precursor solution was spread on a support of stainless steel to give a spread layer having a thickness of approximately 400 µm. The support having the spread layer was placed in a duct of a mist-generating apparatus and brought into contact with a mist of a mist concentration of 0.036 kg (mist)/kg of air, at a flow rate of 0.55 m/sec., for 10 minutes. The spread layer was placed in an aqueous NMP solution (NMP concentration: 20 wt.%) for 5 minutes with the support and subsequently placed in ion-exchange water for 5 minutes. The polyimide precursor porous film produced on the support was recovered to give a self-supporting polyimide precursor porous film. The polyimide precursor porous film was again placed in ion-exchange water for 5 minutes and subsequently dried at room temperature.

The self-supporting polyimide precursor porous film was fixed onto a pinch tenter capable of fixing four corners of the film and placed in a hot air oven. In the hot air oven, the polyimide precursor porous film was heated to increasing temperatures from room temperature up to 320°C by temperature increase of 10°C/min, and further heated to the same temperature for 10 minutes. Thereafter, the heated film was cooled to room temperature, to give an electroconductive aromatic polyimide porous film (thickness: 55 µm).

The thickness of the electroconductive aromatic polyimide porous film was determined by means of a high precision digital instrument MINIAX PH-13 (available from Tokyo Precision). The determination of the thickness of the film was made in the following Examples and Comparison Example in the same manner.

### [Example 2]

The polyimide precursor solution containing the dispersed carbon nanotubes (carbon nanotube content: 20 wt.%) which was prepared in Example 1 above was spread on a support of stainless steel, to give a spread layer having a thickness of approximately 250 µm. Subsequently, the support having the spread layer was placed in an aqueous NMP solution (NMP concentration: 20 wt.%) for 5 minutes and subsequently in ion-exchange water for 5 minutes, to give a coagulated polyimide precursor film. The coagulated polyimide precursor film was recovered from the support to prepare a self-supporting polyimide precursor porous film. The self-supporting polyimide precursor porous film was again placed in ion-exchange water for 5 minutes and dried at room temperature.

The self-supporting polyimide precursor porous film was fixed onto a pinch tenter capable of fixing four corners of the film and placed in an electric radiant heater. In the electric radiant heater, the polyimide precursor porous film was heated according to the following temperature profile, that is, heating from room temperature up to 150°C by temperature increase of 10°C/min, further heated up to 380°C by temperature increase of approximately 150°C/min, and subsequently heated at the same temperature for 3 minutes. Thereafter, the heated film was cooled to room temperature, to give an electroconductive aromatic polyimide porous film (thickness: 30 µm).

### [Example 3]

In a separable flask (volume: 500 mL) were placed N,N-dimethylacetamide (DMAc, 180 g) and subsequently 3,3',4,4'-biphenyltetracarboxylic dianhydride (s-BPDA, 11.88 g) and 4,4'-diaminodiphenyl ether (ODA, 8.12 g). The resulting mixture was stirred at room temperature for 24 hours to prepare a polyimide precursor solution. To the polyimide precursor solution (20 g) was added the dispersion 4 (10 g) and the content was mixed by means of a rotation/revolution mixer at a revolution rate of 2,000 r.p.m. and a rotation rate of 800 r.p.m. for 5 minutes.

Thereafter, 1,2-dimethylimidazole (1,2-DMz, 156 g and monostearyl phosphate triethanolamine salt (0.006 g) were added, and to the resulting mixture was added diethylene glycol butyl methyl ether (BDM, 13 g) by portions under stirring by means of a stirring paddle to give a polyimide precursor solution containing uniformly dispersed carbon nanotubes (carbon nanotube content: 20 wit.%).

The resulting polyimide precursor solution was spread on a glass support to give a spread layer having a thickness of approximately 250 µm.

The support having the spread layer was heated on a hot plate heated to 80°C for 30 minutes, and thereafter the produced self-supporting polyimide precursor porous film was recovered.

The self-supporting polyimide precursor porous film was fixed onto a pinch tenter capable of fixing four corners of the film and placed in a hot air oven. In the hot air oven, the polyimide precursor porous film was heated to an increasing temperatures from room temperature up to 320°C by temperature increase of 10°C/min, and further heated to the same temperature for 10 minutes. Thereafter, the heated film was cooled to room temperature, to give an electroconductive aromatic polyimide porous film (thickness: 32 µm).

### [Example 4]

The procedures of Example 1 were repeated except for employing the dispersion 2 in place of the dispersion 1, to produce an electroconductive aromatic polyimide porous film (thickness: 47 µm).

### [Example 5]

The procedures of Example 1 were repeated except for employing the dispersion 3 in place of the dispersion 1, to produce an electroconductive aromatic polyimide porous film (thickness: 50 µm).

### [Example 6]

In a separable flask (volume: 500 mL) were placed the dispersion 2 (100 g) and NMP (135 g), and the resulting mixture was stirred using a stirring paddle to give a uniform mixture. To the uniform mixture were subsequently added 3,3',4,4'-biphenyltetracarboxylic dianhydride (s-BPDA, 11.88 g) and 1,4-bis(4-aminophenoxy)benzene (TPE-Q, 9.99 g), and the resulting mixture was stirred for 24 hours at room temperature. To thus obtained mixture was then added 3,3',4,4'-biphenyltetracarboxylic dianhydride (s-BPTA, 0.443 g), and the mixture was stirred for 24 hours, to prepare a polyimide precursor solution containing carbon nanotubes (carbon nanotube content: 20 wt.%).

The polyimide precursor solution was spread on a support of stainless steel to give a spread layer having a thickness of approximately 400 µm. The support having the spread layer was placed in a duct of a mist-generating apparatus and brought into contact with a mist of a mist concentration of 0.036 kg (mist)/kg of air, at a flow rate of 0.55 m/sec., for 10 minutes. The spread layer was placed in an aqueous NMP solution (NMP concentration: 20 wt.%) for 5 minutes with the support and subsequently placed in ion-exchange water for 5 minutes. The polyimide precursor porous film produced on the support was recovered to give a self-supporting polyimide precursor porous film. The polyimide precursor porous film was again placed in ion-exchange water for 5 minutes and subsequently dried at room temperature.

The self-supporting polyimide precursor porous film was fixed onto a pinch tenter capable of fixing four corners of the film and placed in a hot air oven. In the hot air oven, the polyimide precursor porous film was heated to increasing temperatures from room temperature up to 320°C by temperature increase of 10°C/min, and further heated to the same temperature for 10 minutes. Thereafter, the heated film was cooled to room temperature, to give an electroconductive aromatic polyimide porous film (thickness: 58 µm).

### [Example 7]

The procedures of Example 1 were repeated except that the mixing ratio of the dispersion 1 to NMP was varied to prepare a polyimide precursor solution containing 5 wt.% of carbon nanotubes dispersed in the solution and thus prepared carbon nanotube-containing polyimide precursor solution was employed to produce an electroconductive aromatic polyimide porous film (thickness: 45 µm).

### [Example 8]

The procedures of Example 1 were repeated except that the mixing ratio of the dispersion 1 to NMP was varied to prepare a polyimide precursor solution containing 10 wt.% of carbon nanotubes dispersed in the solution and thus prepared carbon nanotube-containing polyimide precursor solution was employed to produce an electroconductive aromatic polyimide porous film (thickness: 55 µm).

### [Example 9]

The procedures of Example 1 were repeated except that the dispersion 2 was employed, the mixing ratio of the dispersion 2 to NMP was varied to prepare a polyimide precursor solution containing 30 wt.% of carbon nanotubes dispersed in the solution, and thus prepared carbon nanotube-containing polyimide precursor solution was employed to give a spread layer having a thickness of approximately 250 µm, for producing an electroconductive aromatic polyimide porous film (thickness: 35 µm).

### [Example 10]

The procedures of Example 3 were repeated except that the dispersion 4 was employed, the mixing ratio of the dispersion 4 to NMP was varied to prepare a polyimide precursor solution containing 30 wt.% of carbon nanotubes dispersed in the solution, and thus prepared carbon nanotube-containing polyimide precursor solution was employed to give a spread layer having a thickness of approximately 600 µm, for producing an electroconductive aromatic polyimide porous film (thickness: 80 µm).

### [Comparison Example 1]

The procedures of Example 1 were repeated except that the dispersion 7 was employed, the mixing ratio of the dispersion 7 to NMP was varied to prepare a polyimide precursor solution containing 20 wt.% of acetylene black dispersed in the solution, and thus prepared acetylene black-containing polyimide precursor solution was employed to produce an electroconductive aromatic polyimide porous film (thickness: 70 µm).

### [Evaluation of Characteristics of Electro-conductive Aromatic Polyimide Porous Film]

The electroconductive aromatic polyimide porous films produced in Examples 1 to 10 and Comparison Example 1 were determinated for their resistances in the thickness direction and air permeation resistances (Gurley resistances) by the below-described procedures.

### [Determination of resistance in thickness direction]

The electroconductive aromatic polyimide porous film was punched to give a disc-shaped specimen having a diameter of 19 mm. The specimen was placed between gold-plated electrode having a diameter of 20 mm, and measured its resistance under a pressure of 1 MPa by means of a direct current contact resistance determining meter according to four contacts mode (MODEL 365H, available from Tsuruga Electric Co., Ltd.).

### [Determination of air permeation (Gurley resistance)]

Gurley Densitometer PA-301 and Digital auto-counter PA-302 (available from Tester Industries, Co., Ltd.) were employed for measuring a period of time required for permeating 100 mL of air through the electroconductive aromatic polyimide porous film.

The resistance in the thickness direction and air permeation resistances (Gurley resistances) measured on the electroconductive aromatic polyimide porous film produced in Examples 1 to 10 and Comparison Example 1 are set forth in Table 1.

**Table 1**

| | Resistance in Thickness Direction (mΩ·cm²) | Gurley Resistance (sec/100 cc) |
|---|---|---|
| Example 1 | 15 | 47 |
| Example 2 | 50 | 82 |
| Example 3 | 25 | 16 |
| Example 4 | 16 | 27 |
| Example 5 | 20 | 22 |
| Example 6 | 13 | 31 |
| Example 7 | 100 | 38 |
| Example 8 | 70 | 75 |
| Example 9 | 11 | 108 |
| Example 10 | 10 | 15 |
| Com.Ex. 1 | >10000 | 53 |

Remarks: In Examples 1-10, multi-layer carbon nanotubes were employed as the electroconductive carbonaceous particles, and in Com.Ex. 1, acetylene black was employed as the electroconductive carbonaceous particles.

### [Production of Electroconductive Aromatic Polyimide Porous film - 2]

### [Example 11]

To the dispersion 5 (15.0 g) was added 4,4'-diaminodiphenyl ether (ODA, 1.216 g), and to the mixture was added 3,3',4,4'-biphenyltetracarboxylic dianhydride (s-BPDA, 1.784 g) at room temperature for 10 minutes under stirring. Subsequently, to the mixture were added N,N-dimethylacetamide (DMAc, 6.75 g), dibasic ester (DBE, 15.0 g) and monostearyl phosphate triethanolamine salt (0.015 g) under stirring to prepare a uniform polyimide precursor solution containing dispersed carbon nanotubes (carbon nanotube content: 20 wt.%).

The polyimide precursor solution was spread on a support of stainless steel to give a spread layer having a thickness of approximately 700 nm. The support having the spread layer was heated on a hot plate heated to 135°C for 10 minutes. The polyimide precursor porous film was recovered from the support, to give a self-supporting polyimide precursor porous film. The self-supporting polyimide precursor porous film was fixed onto a pinch tenter capable of fixing four corners of the film and placed in a hot air oven. In the hot air oven, the polyimide precursor porous film was heated to increasing temperatures from 130°C up to 330°C by temperature increase of 10°C/min, and further heated to the same temperature for 10 minutes. Thereafter, the heated film was cooled to room temperature, to give an electroconductive aromatic polyimide porous film (thickness: 52 µm).

### [Example 12]

To the dispersion 5 (15.0 g) were added dibasic ester (DBE, 15.0 g) and 4,4'-diaminodiphenyl ether (ODA, 1.216 g), and to the mixture was added 3,3',4,4'-biphenyltetracarboxylic dianhydride (s-BPDA, 1.784 g) at room temperature for 5 minutes under stirring. Subsequently, to the mixture were added N,N-dimethyl-acetamide (DMAc, 6.75 g), 1,2-dimethylimidazole (1,2-DMz, 0.233 g, 0.2 mole equivalent), and monostearyl phosphate triethanolamine salt (0.015 g). The resulting mixture was stirred for 4 hours to prepare a uniform polyimide precursor solution containing dispersed carbon nanotubes (carbon nanotube content: 20 wt.%).

The polyimide precursor solution was spread and heated on a hot plate in the same manner as in Example 11, to prepare a self-supporting polyimide precursor porous film. The self-supporting polyimide precursor porous film was further heated to high temperatures in the same manner, to give an electroconductive aromatic polyimide porous film (thickness: 72 µm).

### [Example 13]

The procedures of Example 12 were repeated except that the spread layer of the polyimide precursor solution was formed to have a thickness of approximately 450 µm), whereby producing an electroconductive aromatic polyimide porous film (thickness: 46 µm).

### [Example 14]

The procedures of Example 12 were repeated except that the total amount of s-BPDA and ODA, the amount of DMAc (including DMAc in the dispersion) and the amount of DBE were used in a ratio by weight of 1:8.5:6, and that the spread layer of the polyimide precursor solution was formed to have a thickness of approximately 200 µm, whereby producing an electroconductive aromatic polyimide porous film (thickness: 30 µm).

### [Example 15]

The procedures of Example 12 were repeated except that the total amount of s-BPDA and ODA, the amount of DMAc (including DMAc in the dispersion) and the amount of DBE were used in a ratio by weight of 1:7.4:5, and that 1,2-DMz was used in an amount of 0.3 mole equivalent, whereby producing an electroconductive aromatic polyimide porous film (thickness: 86 µm).

### [Example 16]

The procedures of Example 12 were repeated except that the total amount of s-BPDA and ODA, the amount of DMAc (including DMAc in the dispersion) and the amount of DBE were used in a ratio by weight of 1:7:4, and that 1,2-DMz was used in an amount of 0.4 mole equivalent, whereby producing an electroconductive aromatic polyimide porous film (thickness: 73 µm).

### [Example 17]

The procedures of Example 12 were repeated except that 1,2-DMz (basic compound) was replaced with 2-methylimidazole (2Mz) in the same mole equivalent, whereby producing an electroconductive aromatic polyimide porous film (thickness: 86 µm).

### [Example 18]

The procedures of Example 12 were repeated except that 1,2-DMz (basic compound) was replaced with triethylamine (TEA) of 0.12 mole equivalent, whereby producing an electroconductive aromatic polyimide porous film (thickness: 85 µm).

### [Example 19]

The procedures of Example 12 were repeated except that 0.3 g of poly(methyl methacylate) (PMMA, weight average molecular weight: approximately 70,000) was dissolved in N,N-dimethylacetamide (DMAc), whereby producing an electroconductive aromatic polyimide porous film (thickness: 75 µm).

### [Example 20]

The procedures of Example 12 were repeated except that the dispersion 5 was replaced with the dispersion 6 and DMAc was replaced with dimethylformamide (DMF), whereby producing an electroconductive aromatic polyimide porous film (thickness: 85 µm).

### [Evaluation of electroconductive aromatic polyimide porous film]

The resistance in the thickness direction and air permeation resistances (Gurley resistances) measured on the electroconductive aromatic polyimide porous film produced in Examples 11 to 20 are set forth in Table 2.

**Table 2**

| | Resistance in Thickness Direction (mΩ·cm²) | Gurley Resistance (sec/100 cc) |
|---|---|---|
| Example 11 | 28 | 92 |
| Example 12 | 26 | 40 |
| Example 13 | 25 | 0.6 |
| Example 14 | 21 | 0.9 |
| Example 15 | 25 | 20 |
| Example 16 | 30 | 165 |
| Example 17 | 26 | 26 |
| Example 18 | 26 | 42 |
| Example 19 | 63 | 6 |
| Example 20 | 26 | 25 |

### [Evaluation of electroconductive aromatic polyimide porous film for use as gas diffusion film of membrane-electrode-assembly of fuel cell]

### [Manufacture of membrane-electrode-assembly (MEA)]

In a 50 mL-volume sample bottle were placed 0.4g of platinum-deposited carbonaceous particles (platinum: 60 wt.%), 1 g of water, and 2.68 g of commercially available 5 wt.% Naphione Dispersion (available from Sigma Aldrich, U.S.A.). The resulting mixture was processed and dispersed by means of ultrasonic processer and stirring means for preparing a catalyst paste. The catalyst paste was coated on a support sheet (PTFE sheet of 100 µm) and dried to form a catalyst layer (amount of platinum: 0.27 mg/cm²).

The catalyst layer was transferred onto both surfaces of a solid polymer film (Naphion 1135, available from DuPont, U.S.A.) by a hot press method to produce CCM.

The electroconductive aromatic polyimide porous film produced in Example 10 was processed to show repellency. The resulting repellent film was placed on either surface of the CCM and combined to manufacture a membrane-electrode-assembly (MEA) having an electrode surface area of 5 cm².

### [Power generation test]

The MEA manufactured above was placed in a solid polymer fuel cell-evaluating cell (Cerpentainflow, available from Electrochem Co., Ltd.), and the power generation property was evaluated by means of a fuel cell-evaluating system (GFT, available from Toyo Technica, Co., Ltd.). The power generation was measured by supplying pure hydrogen gas to the negative electrode side (fuel side) and pure oxygen gas to the positive electrode side, both at an atmospheric pressure and at a gas flow rate of 500 mL/min. The measurement was performed a cell temperature of 80°C and a bubbler temperature of 80°C under fully humid condition, to obtain a potential-current curve. In the measurements, cell resistances were determined by measuring voltages at current densities of 0.4 A/cm², 1 A/cm², and 1.5 A/cm², and a cell resistance at a current density of 1 A cm². The determined cell resistances are used to indicate the powder generation property.

For the sake of reference, a membrane-electrode assembly was manufactured using a commercially available material for the preparation of gas diffusion layer (SGL-244A, available from SGL).

The results of the evaluations are set forth in Table 3.

**Table 3**

| Gas Diffusion layer | Cell Voltage (V) | | Cell Resistance (mΩ·cm²) | |
|---|---|---|---|---|
| | 0.4 A/cm² | 1 A/cm² | 1. 5 A/cm² | 1 A/cm² |
| Invention | 0.70 | 0.53 | 0.35 | 170 |
| Known | 0.70 | 0.53 | 0.36 | 175 |

Remarks:
Invention - Electroconductive aromatic polyimide porous film
Known - Commercially available SGL-24AA

The results set forth in Table 3 indicate that a fuel cell manufactured employing an electroconductive aromatic polyimide porous film of the invention as a gas diffusion film shows a power generation property essentially identical to that shown by a fuel cell employing a commercially available material for gas diffusion.

## Claims

1. An electroconductive aromatic polyimide porous film comprising an aromatic polyimide porous film and carbon nanotubes dispersed in the film which has a resistance in the thickness direction of not higher than 100 mΩ·cm² and a Gurley air permeation resistance of not higher than 300 seconds/100 cc.

2. The electroconductive aromatic polyimide porous film of claim 1, which has a resistance in the thickness direction of not higher than 50 mΩ·cm².

3. The electroconductive aromatic polyimide porous film of claim 1, which has a Gurley air permeation resistance of not higher than 100 seconds/100 cc.

4. The electroconductive aromatic polyimide porous film of claim 1, which has a resistance in the thickness direction of not less than 0.01 mΩ·cm².

5. The electroconductive aromatic polyimide porous film of claim 1, which has a Gurley air permeation resistance of not less than 0.1 second/100 cc.

6. The electroconductive aromatic polyimide porous film of claim 1, in which the aromatic polyimide porous film is made of an aromatic polyimide obtained by polycondensation of an aromatic tetracarboxylic acid compound and an aromatic amine compound and imide-forming reaction of the polycondensated product.

7. The electroconductive aromatic polyimide porous film of claim 1, in which the carbon nanotubes are multi-layer carbon nanotubes.

8. The electroconductive aromatic polyimide porous film of claim 1, which contains the carbon nanotubes in an amount of 10 to 50 wt.%.

9. A membrane-electrode-assembly comprising a polyelectrolyte membrane, a catalyst layer and a gas diffusion layer both arranged on respective sides of the polyelectrolyte membrane, in which the gas diffusion layer comprises the electroconductive aromatic polyimide porous film of claim 1.

10. A process for producing an electroconductive aromatic polyimide porous film comprising an aromatic polyimide porous film and carbon nanotubes dispersed in the film which has a resistance in the thickness direction of not higher than 100 mΩ·cm² and a Gurley air permeation resistance of not higher than 300 seconds/100 cc, which comprises the steps of:
preparing an aromatic polyimide precursor by polycondensation of an aromatic tetracarboxylic acid compound and an aromatic diamine compound in an organic solvent;
adding to thus prepared polyimide precursor solution a poor solvent having a boiling-point higher than that of the organic solvent, carbon nanotubes, and a dispersant for the carbon nanotubes, whereby preparing a carbon nanotube-containing aromatic polyimide precursor solution;
spreading the carbon nanotube-containing aromatic polyimide precursor solution on a support, whereby preparing a spread film;
heating the spread film to evaporate the organic solvent and poor solvent, whereby converting the spread film into a phase separation film; and
heating the phase separation film to an increased temperature, whereby converting the phase separation film into the aromatic polyimide porous film.

11. The process of claim 10, in which the dispersant for carbon nanotubes is a polymer dispersant selected from the group consisting of methyl cellulose, ethyl cellulose, propoxymethyl cellulose, polyvinyl pyrrolidone, polyvinyl alcohol, polyvinyl butyral, and polyvinyl formal.

12. The process of claim 10, in which the carbon nanotubes in the carbon nanotube-containing aromatic polyimide precursor solution are dispersed in the precursor solution in the form of aggregated particles having a median diameter of not larger than 5 µm, the median diameter being determined by means of laser spectroscopy.

13. A process for producing an electroconductive aromatic polyimide porous film comprising an aromatic polyimide porous film and carbon nanotubes dispersed in the film which has a resistance in the thickness direction of not higher than 100 mΩ·cm² and a Gurley air permeation resistance of not higher than 300 seconds/100 cc, which comprises the steps of:
preparing an aromatic polyimide precursor by polycondensation of an aromatic tetracarboxylic acid compound and an aromatic diamine compound in an organic solvent;
adding to thus prepared polyimide precursor solution carbon nanotubes and a dispersant for the carbon nanotubes, whereby preparing a carbon nanotube-containing aromatic polyimide precursor solution;
spreading the carbon nanotube-containing aromatic polyimide precursor solution on a support, whereby preparing a spread film;
bringing the spread film into contact with a poor solvent, whereby converting the spread film into a phase separation film; and
heating the phase separation film to a high temperature, whereby converting the phase separation film into the aromatic polyimide porous film.

14. The process of claim 13, in which the dispersant for carbon nanotubes is a polymer dispersant selected from the group consisting of methyl cellulose, ethyl cellulose, propoxymethyl cellulose, polyvinyl pyrrolidone, polyvinyl alcohol, polyvinyl butyral, and polyvinyl formal.

15. The process of claim 13, in which the carbon nanotubes in the carbon nanotube-containing aromatic polyimide precursor solution are dispersed in the precursor solution in the form of aggregated particles having a median diameter of not larger than 5 µm, the median diameter being determined by means of laser spectroscopy.
